# EUROPEAN PATENT APPLICATION

(11) **EP 3 459 791 A1**
(43) Date of publication of application: **27.03.2019**
(21) Application number: 17192931.8
(22) Date of filing: 25.09.2017
(51) Int. Cl.: B60Q 1/32, B60R 3/00

(54) **RUNNING BOARD FOR A VEHICLE AND VEHICLE COMPRISING AT LEAST ONE SUCH RUNNING BOARD**

(71) Applicant: Progress Europe Automotive Innovations B.V., 8171 NT Vaasen (NL)
(72) Inventor: Doornbos, Harm Jacob, 8171 NT VAASSEN (NL)
(74) Representative: Slikker, Wilhelmina Johanna

(57) **Abstract**

The invention relates to a running board (19 for a vehicle (3), for example a car, bus, truck, or the like, said running board (1) comprising a frame (2) with at least one mounting element (4) for mounting said frame (2) to said vehicle (3), and wherein said running board (1) comprises at least one light element (6) arranged for emitting light.

The invention further relates to a vehicle (3) comprising such a running board (1).

## Description

The invention relates to a running board for a vehicle, for example a car, bus, truck, or the like, said running board comprising a frame with at least one mounting element for mounting said frame to said vehicle.

Such a running board is known per se. Such a running board may for example be mounted to relatively high and/or large vehicles in order to enable a user to stand on said running board and to enter said vehicle more easily and/or for said user to be able to reach the roof or other higher parts of said vehicle.

It is an object of the invention to improve said known running board.

This object may be achieved by providing a running board according to the preamble, which running board according to the invention comprises at least one light element arranged for emitting light.

Such a light element, lighting element or lighting means that is arranged for emitting light may enable a user to see the running board in certain conditions, such as for example in the dark or in cloudy or foggy weather conditions. In addition or alternatively, such a light element may enhance the aesthetic appearance of the running board.

Said light element may be provided on any suitable part of the running board. For example, said light element may be provided on the frame of the running board or on the at least one mounting element of the running board. The light element may be directly or indirectly provided on the running board.

It is noted that where "on" is used in this application, this may mean "on", "in", or "at", or otherwise connected or arranged near.

Said at least one mounting element may for example be an integral part of the frame or may for example be attached or attacheable to said frame as a separate mounting element.

With use of said at least one mounting element said running board may be mounteable or attacheable to said vehicle. Optionally said at least one mounting element may be an integral part of said vehicle.

In an embodiment of the running board, said running board comprises at least one translucent area that allows light that is emitted by said at least one light element to pass through said at least one translucent area.

Said at least one translucent area may for example be part of the light element itself, which light element may comprise a cover that is fully or partly translucent thereby forming said translucent area.

Alternatively, said at least one translucent area may for example be formed by any suitable translucent element that is part of said running board. Such a translucent element may protect said light element from environmental conditions, while allowing said light to pass there trough and to be visible from the outside of the running board.

In addition or alternatively, by choosing a suitable position and/or shape and/or size and/or number of said translucent area of translucent element, the position and/or shape and/or size and/or number of the light through passing area or element of the running board may easily be chosen, while not requiring the light element itself having any specific position and/or shape and/or size and/or number.

For example, said light element may be chosen to be one elongated light strip. A plurality of translucent areas or elements having a chosen shape and/or size may be provided, such that said plurality of translucent areas or elements having said chosen shape and/or size allow said light to pass there through and are thereby visible by or for a user.

As another example, said light element may be chosen to be one elongated light strip, wherein one or two of two longitudinal end sides extending in the longitudinal direction of said light strip may be covered by a non-translucent element, and a central longitudinal translucent area extending in the longitudinal direction of said strip may be provided next or between said one or two non-translucent element(s), such that the width and/or position of the translucent area is easily chosen.

Said translucent area or element may for example be a diffuse or diffusor area or element. If for example a light element having separate LEDs is provided, such a diffuse area or element may diffuse the light, such that the separate LEDs are not visible by or for a user, which may be aesthetically pleasing.

In another embodiment of the running board, said running board comprises at least one reflector for reflecting light that is emitted by said at least one light element.

Such at least one reflector may reflect the light in a suitable direction and/or may allow the light element to be in a certain position that is not directly visible by a user and to direct the light in such a direction that it is visible by a user.

In yet another embodiment of the running board, said at least one light element and/or said at least one translucent area and/or said at least one reflector is provided substantially on an upper side or a front side of said frame or substantially on a front side of said mounting element.

Upper and front are defined here in use of the running board, i.e. as mounted on a said vehicle.

For example, the upper side may be the side of the running board that forms a substantially flat surface for a user to stand on.

For example, the front side of the frame or mounting element may be defined in a direction away from the vehicle, wherein the rear side is directed towards the vehicle.

Practically said at least one light element may comprise at least one LED and/or at least one glass fibre, but any other suitable light source comprising any suitable elements may be chosen.

In yet another embodiment of the running board, said running board comprises at least one connecting element for connecting said at least one light element to a power source.

Said power source may be a battery or the like that may for example be accommodated in the frame of the running board. However, it is preferred to connect said at least one light element to a power source of said vehicle, for example a battery of the vehicle that may also be used for powering other elements of the vehicle.

Said at least one connecting element may be arranged such or may be provided such that a water proof connection between the light element and the power source is provided.

Dependent on the type of vehicle said power source may for example be a 12V or 24V power source. Said running board may optionally comprise an electronic module or adapter for adapting to either said 12V or 24V power source.

In yet another embodiment of the running board said frame comprises at least two parts, wherein a first part is connected to said mounting element and a second part is optionally releaseably connecteable to said first part, and wherein said second part comprises said at least one light element and/or said at least one translucent area and/or said at least one reflector.

An advantage of such an embodiment is that said first part may for example be a standard part, wherein said second part may easily be adapted to the wishes of a user and may have any suitable chosen size and/or shape.

Preferably, said first part and said second part comprise mutually cooperating connection means for connecting said second part to said first part, wherein said mutually cooperating connection means are for example formed by a snap connection.

Such a snap connection may for example be formed by a female connecting element and a male connecting element, which male connecting element may be inserted into the female connecting element. One of the female connecting element and the male connecting element may be provided on the first part, and the other of the female connecting element and the male connecting element may be provided on the second part.

In yet another embodiment of the running board said frame comprises a hollow profile, wherein said at least one light element and/or said at least one reflector is accommodated in said hollow profile.

Such a hollow profile allows for various parts of the running board, for example the at least one light element and/or said at least one reflector to be accommodated therein. Said electronic module or adapter and/or said at least one connecting element may for example be, fully or partly, accommodated in said hollow profile.

Said hollow profile may preferably define a water proof accommodating space therein.

The invention also relates to a vehicle, for example a car, bus, truck, or the like, comprising at least one running board as described in any of the embodiments above or having any of the features described above, alone or in combination, wherein said at least one running board is mounted to said vehicle by means of said at least one mounting element.

Said running board may be mounted to said vehicle in such a manner that an upper surface or side of said frame forms a platform for a user to stand on and/or in such a manner that a front side of said frame or mounting element is directed away from the vehicle and/or is substantially parallel to a side of the vehicle. The upper surface of the frame may for example comprise rib or stud like elements.

It is noted that said vehicle may be any type of vehicle.

The invention will be further elucidated with reference to figures shown in a drawing, wherein:
Figures 1A and 1B show a first embodiment of the running board in a schematic perspective view (fig. 1A) and corresponding schematic cross-sectional view (fig. 1B);
Figures 2A and 2B show a second embodiment of the running board in a schematic perspective view (fig. 2A) and corresponding schematic cross-sectional view (fig. 2B);
Figures 3A and 3B show a third embodiment of the running board in a schematic perspective view (fig. 3A) and corresponding schematic cross-sectional view (fig. 3B);
Figures 4A and 4B show a fourth embodiment of the running board in a schematic perspective view (fig. 4A) and corresponding schematic cross-sectional view (fig. 4B); and
Figures 5A and 5B show a fifth embodiment of the running board in a schematic transverse cross-section.

In the figures, same and similar reference numerals refer to same and similar elements.

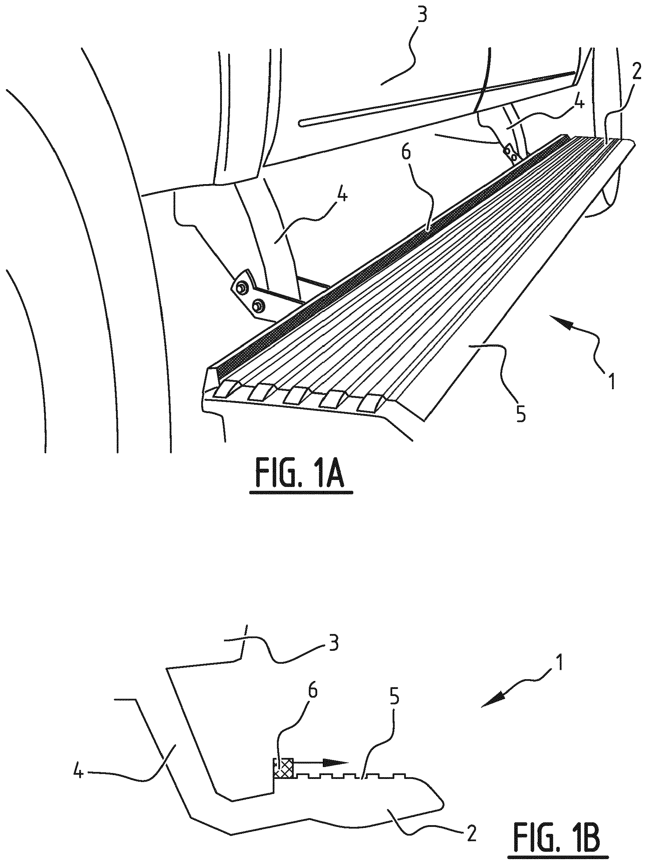

Figures 1A, 1B, 2A, 2B, 3A, 3B, 4A and 4B show a running board 1 with a frame 2 that is attached to a vehicle 3, in this figure a car, by means of, in this example, two mounting elements 4. The running board 1 is in this example mounted to said vehicle in such a manner that an upper surface 5 of said frame 2 forms a platform for a user to stand on and that that a front side of said frame 2 or mounting element 4 is directed away from the vehicle 3, i.e. is substantially parallel to a side of said vehicle 3. In all embodiments the running board 1 comprises at least one light element 6, such that part of said running board 1 is visible in for example dark or cloudy conditions. Said light element may be connected to a power source via a connecting element (not shown in the figures), for example a power source of the vehicle 3. A switch may be provided to power or turn on the light element 6 such that the light element 6 emits light and/ or the light element 6 may automatically be powered or turned on if a user releases the locks of the vehicle, opens the doors of the vehicle, starts the engine of said vehicle, turns on any other light of the vehicle, such as the head lights, or at any other suitable moment or upon performing any other suitable action.

Figures 1A, 1B, 2A, 2B, 3A, 3B, 4A and 4B show that the light element 6 may be provided in any desired way and/or at any desired position or location of the running board 1. These various embodiments are provided by way of example and are in no way limiting.

In the first embodiment of figure 1A and 1B, a light element 6, in this example in the form of a longitudinal LED-strip, is provided on said upper surface 5 of said frame 2. In this example, said LED-strip extends over the length of the upper surface 5, in this example along one longitudinal side thereof, in this example the longitudinal side that is closest to the vehicle 3 of the two longitudinal sides of the upper surface 5. Said LED-strip in this example comprises a strip made of a plastics material, such as rubber or any other suitable material, such that said light element 6 is substantially waterproof. Said strip is translucent, such that the light provided by at least one LED passes there through. Optionally said strip may be diffuse such that it diffuses the light emitted by the at least one LED. Optionally said strip may have any chosen colour such that the light that passes trough the strip may have said chosen colour.

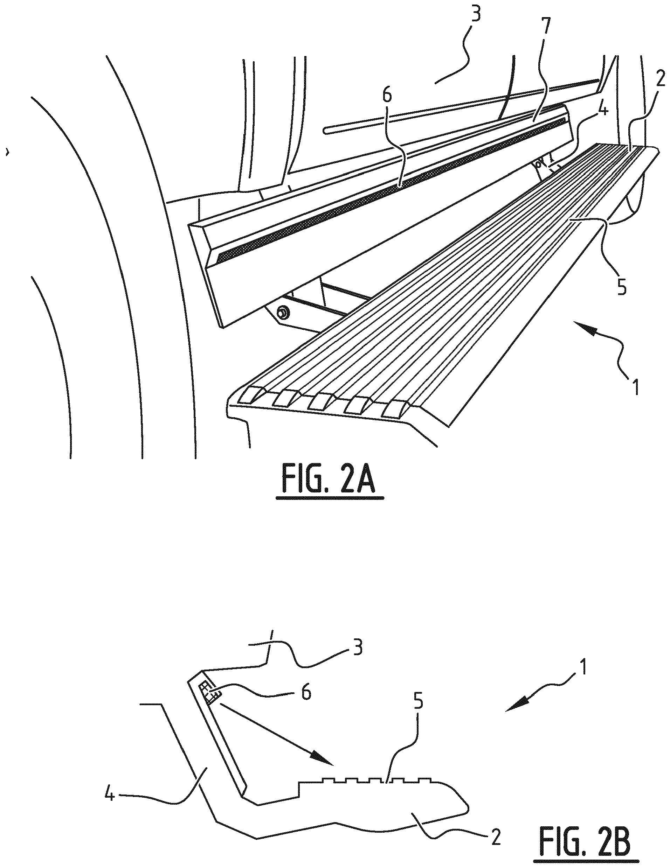

In the second embodiment of figure 2A and 2B, a light element 6, in this example in the form of a longitudinal LED-strip, is provided on a decoration strip 7 that is attached to the mounting elements 4 of the running board 1, in this example substantially above the upper surface 5 of the running board 1. The longitudinal direction of the decoration strip 7 extends substantially parallel to the side or longitudinal direction of the vehicle 3 and/or to the longitudinal direction of the frame 2. In this example, said LED-strip extends over the length of the decoration strip 7. In this example, said LED-strip is provided substantially on a front side of the running board 1, such that light is emitted in a direction away from the side of the vehicle 3. In this example, said LED-strip is directed in an inclined, downwards direction, such that light 3 is directed or emitted in an inclined, downwards direction towards the upper surface 5 of the frame 2. Said LED-strip in this example comprises a strip made of a plastics material, such as rubber or any other suitable material, such that said light element 6 is substantially waterproof. Said strip is translucent, such that the light provided by at least one LED passes there through. Optionally said strip may be diffuse such that it diffuses the light emitted by the at least one LED. Optionally said strip may have any chosen colour such that the light that passes trough the strip may have said chosen colour.

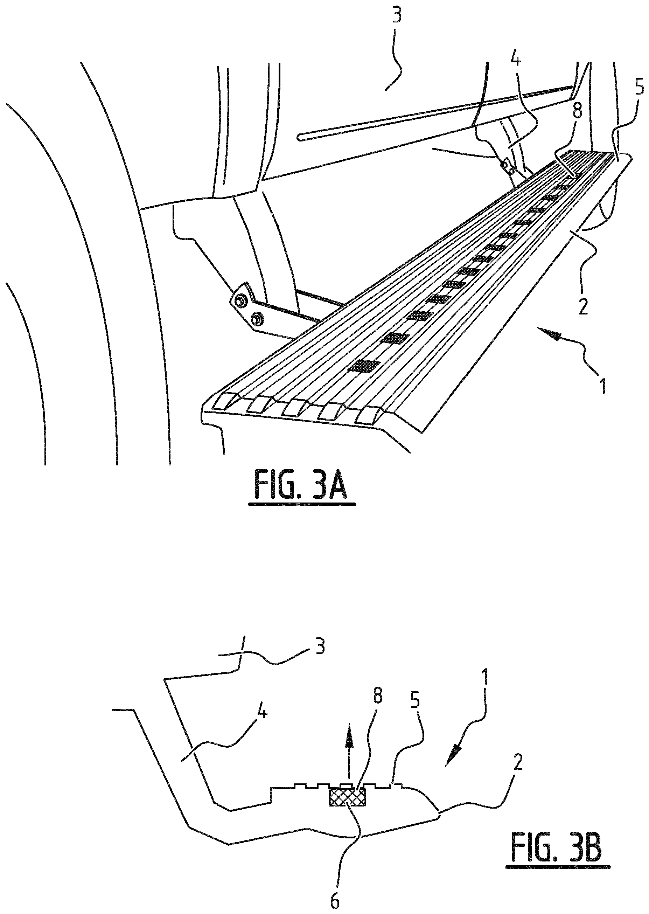

In the first embodiment of figure 3A and 3C, a light element 6, in this example in the form of a longitudinal glass fibre connecting to a light source, for example a LED, is provided within the frame 2 of the running board 1. The upper surface 5 of the frame 2 comprises a plurality, in this example fourteen, of translucent areas or elements 8, which are arranged in the vicinity of the glass fibre. Light emitted by the glass fibre 6 passes through the translucent areas or elements 8, such that a plurality of illuminating areas is visible in the upper surface of the frame 2. The translucent areas or elements 8 are provided in line with each other in one longitudinal row over the length of the upper surface 5 of the frame 2. Optionally said translucent elements 8 may have any chosen colour such that the light that passes trough the translucent elements 8 may have said chosen colour. The colour of the various translucent elements 8 may be the same or different.

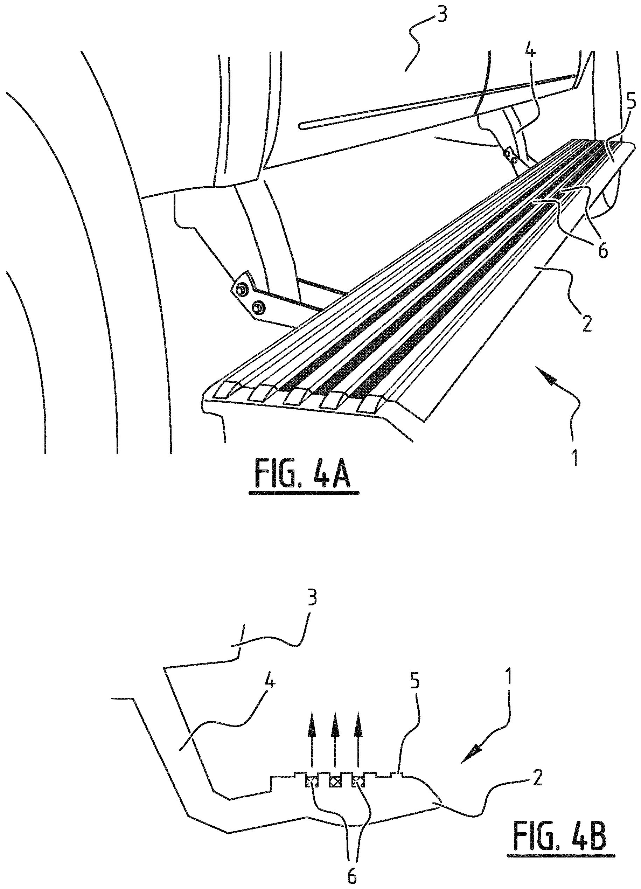

In the fourth embodiment of figure 4A and 4B, three light elements 6, in this example in the form of longitudinal LED-strips, are provided on said upper surface 5 of said frame 2. In this example, said LED-strips extend in parallel to each other over the length of the upper surface 5. Said LED-strips in this example comprise a strip made of a plastics material, such as rubber or any other suitable material, such that said light elements 6 are substantially waterproof. Said strips are translucent, such that the light provided by at least one LED passes there through. Optionally said strips may be diffuse such that they diffuse the light emitted by the at least one LED. Optionally said strips may have any chosen colour such that the light that passes trough the strips may have said chosen colour. The three strips may optionally have the same or different colours.

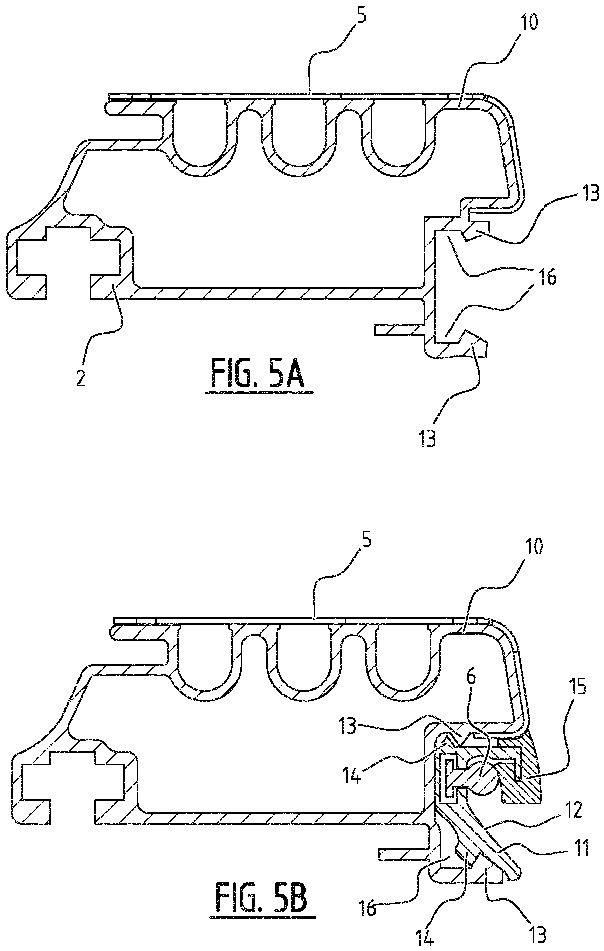

Figures 5A and 5B show a transverse cross-section through the frame 2 of a fifth embodiment of the running board. In this example, the frame 2 comprises a first frame part 10. The first frame part 10 in this example forms a main part of the frame 2 and comprises for example the upper surface 5 of the frame 2. For sake of simplicity, the mounting elements are not shown, but they may for example be part of or attached to the first frame part 10. In this example, the first frame part 10 is a hollow profile. A second frame part 11, see figure 5B, may be attached to the first frame part 10. For this purpose, the first frame part 10 and second frame part 11 may comprise mutually cooperating connecting elements 13, 14. In this example, the connecting elements 13 of the first frame part 10 comprise a part that extends outwards from the connecting element 13, thereby defining a female receiving space 16. In this example, the connecting elements 14 of the second frame part 11 comprise a male part that may be arranged in the female receiving spaces 16 of the connecting elements 13. This way, the second frame part 11 may be connected to the first frame part via a snap connection, in which the male parts snap into the female parts. In this example, the second frame part 11 comprises a light element 6, which is in this example arranged behind a cover 15. The cover 15 may either be translucent or non-translucent. A reflector 12 may be arranged near the light element 6, for reflecting light emitted thereby. The reflector 12 may direct the emitted light in any desired direction by positioning and/or orientating the reflector 12 in any desired way.

It is noted that the invention is not limited to the above discussed exemplary embodiments but also extends to other variants within the scope of the appended claims.

For example, it is clear for the skilled person that the light element and/or translucent element may be embodied in any desired way and may for example have any desired shape and/or size and/or position and/or orientation. In addition, it is clear that any desired number of light elements and/or translucent elements may be provided.

## Claims

1. Running board for a vehicle, for example a car, bus, truck, or the like, said running board comprising a frame with at least one mounting element for mounting said frame to said vehicle, and wherein said running board comprises at least one light element arranged for emitting light.

2. Running board according to claim 1, comprising at least one translucent area that allows light that is emitted by said at least one light element to pass through said at least one translucent area.

3. Running board according to claim 1 or 2, comprising at least one reflector for reflecting light that is emitted by said at least one light element.

4. Running board according to any of the previous claims, wherein said at least one light element and/or said at least one translucent area and/or said at least one reflector is provided substantially on an upper side or a front side of said frame or substantially on a front side of said mounting element.

5. Running board according to any of the previous claims, wherein said at least one light element comprises at least one LED.

6. Running board according to any of the previous claims, wherein said at least one light element comprises at least one glass fibre.

7. Running board according to any of the previous claims, comprising at least one connecting element for connecting said at least one light element to a power source, for example a power source of said vehicle.

8. Running board according to any of the previous claims, wherein said frame comprises at least two parts, wherein a first part is connected to said mounting element and a second part is connecteable to said first part, and wherein said second part comprises said at least one light element and/or said at least one translucent area and/or said at least one reflector.

9. Running board according to claim 8, wherein said first part and said second part comprise mutually cooperating connection means for connecting said second part to said first part, wherein said mutually cooperating connection means are for example formed by a snap connection.

10. Running board according to any of the previous claims, wherein said frame comprises a hollow profile, wherein said at least one light element and/or said at least one reflector is accommodated in said hollow profile.

11. Vehicle, for example a car, bus, truck, or the like, comprising at least one running board according to any of the claims 1 - 10, wherein said at least one running board is mounted to said vehicle by means of said at least one mounting element.
